Europäisches Patentamt

European Patent Office

Office européen des brevets

(11) Numéro de publication: **0 115 972**
**B1**

(12) **FASCICULE DE BREVET EUROPÉEN**

(45) Date de publication du fascicule du brevet:
23.07.86

(51) Int. Cl.⁴: **B 60 N 1/10**

(21) Numéro de dépôt: **84400016.6**

(22) Date de dépôt: **05.01.84**

(54) Siège escamotable à dossier basculant.

(30) Priorité: 07.01.83 FR 8300479

(43) Date de publication de la demande:
15.08.84 Bulletin 84/33

(45) Mention de la délivrance du brevet:
23.07.86 Bulletin 86/30

(84) Etats contractants désignés:
**DE GB IT**

(56) Documents cité:
**DE-A-3 110 130**
**FR-A-2 353 414**
**GB-A-2 095 984**

(73) Titulaire: **AUTOMOBILES CITROEN, 62 Boulevard Victor- Hugo, F-92200 Neuilly- sur- Seine (FR)**
Titulaire: **AUTOMOBILES PEUGEOT, 75, avenue de la Grande Armée, F-75116 Paris (FR)**

(72) Inventeur: **Prion, Christian Joseph, 1 Square Yves du Manoir, F-91300 Massy (FR)**

(74) Mandataire: **Boivin, Claude, 9, rue Edouard- Charton, F-78000 Versailles (FR)**

LIBER, STOCKHOLM 1986

EP 0 115 972 B1

## Description

Les véhicules modernes sont souvent utilisés pour tansporter des objets divers encombrants qui nécessitent l'extension momentanée du volume de charge normalement prévu et qui est assez souvent relativement faible dans les véhicules de faibles et moyennes dimensions. Cette utilisation amène à prévoir des sièges arrière amovibles et basculants qui, par escamotage partiel ou total ou bien par rabattement du dossier permettent d'augmenter le volume de charge utile.

La présente invention concerne un siège de véhicule dont le dossier est relié, à sa partie inférieure, à la structure du véhicule par des biellettes basculantes et porte dans sa partie supérieure au moins un doigt de verrouillage mobile axialement et coopérant avec une gâche laterale solidaire de la structure, tel que décrit dans le GB-A-20 95 984.

Le siège selon l'invention propose une solution différante de celle de cet état de technique et est caractérisé en ce que la gâche comporte une première lumière dans laquelle peut s'engager le doigt de verrouillage pour une première position arrière du dossier, une seconde lumière dans laquelle peut s'engager le doigt de verrouillage dans une seconde position avant du dossier, les deux lumières étant reliées l'une à l'autre par un couloir dont la profondeur est inférieure à celle des lumières, qui débouche vers l'avant par une buse de dégagement et qui est délimité vers le bas par une piste de guidage pouvant être soit rectiligne ou approximativement rectiligne, soit approximativement centrée sur l'axe de pivotement inférieur du dossier pour la position d'extrémité arrière des biellettes, et des moyens élastiques tendant à appliquer le doigt sur la piste de guidage du couloir.

Il est ainsi possible de faire basculer le dossier vers l'avant lorsque les biellettes se trouvent dans ladite position d'extrémité arrière, ce qui augmente le volume de charge en position haute, puis de déplacer vers l'avant la partie inférieure du dossier par basculement des biellettes, en obtenant ainsi une troisième position du dossier. Il est possible de rabattre complètement le dossier sur l'assise en dégageant le doigt de la lumière avant ou arrière et en le sortant du couloir par la buse de dégagement de celui-ci.

On a décrit ci-après, à titre d'exemples non limitatifs, deux modes de réalisation du siège selon l'invention, avec référence aux dessins annexés dans lesquels:

La Figure 1 est une vue en élévation de la gâche de verrouillage du dossier du siège;

La Figure 2 est une vue latérale suivant la flèche F de la Figure 1 et montre le dossier et sa gâche de verrouillage;

La Figure 3 en est une vue en coupe longitudinale de la gâche suivant III-III de la Figure 1;

La Figure 4 en est une vue en coupe suivant IV-IV de la Figure 3;

La Figure 5 est une vue en élévation de la gâche, dans un second mode de réalisation.

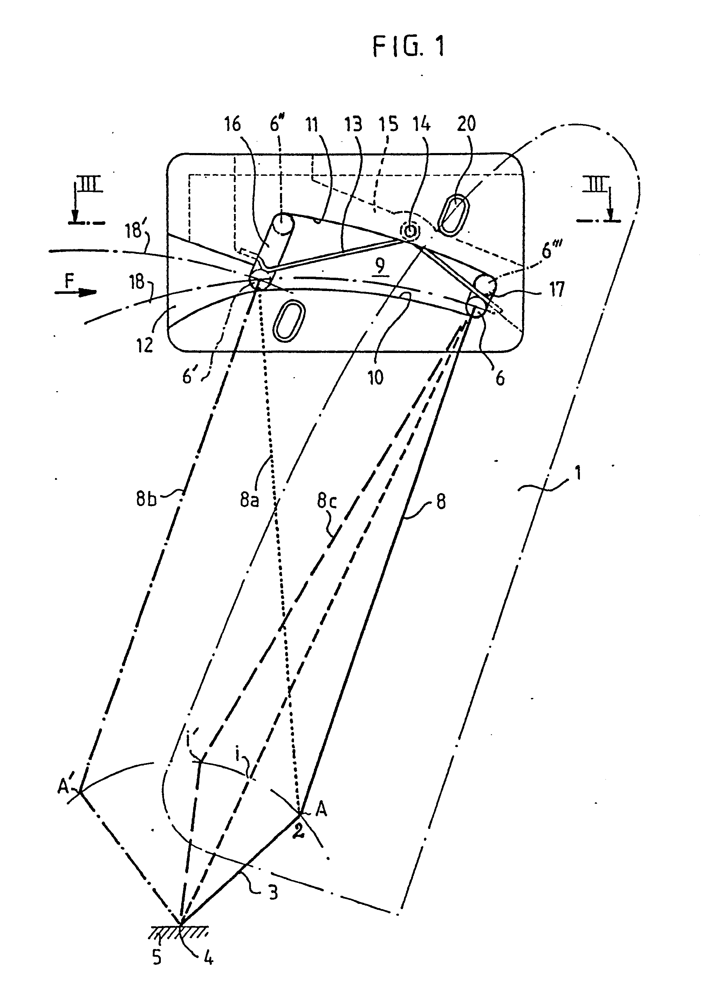

Tel qu'il est représenté au dessin, le siège selon l'invention comprend un dossier 1 qui est articulé à sa partie inférieure autour d'un axe horizontal 2. Chacune des extrémités de cet axe est portée par une bielle 3 qui est articulée en 4 sur la structure 5 d'un véhicule. A sa partie supérieure, le dossier 1 porte, sur chacune de ses faces latérales, un doigt de verrouillage 6 qui est mobile transversalement par rapport au dossier 1 et coopère avec une gâche 7 solidaire de la structure 5. Quand les biellettes 3 pivotent, elles passent de la position représentée en traits pleins à la Figure 1, l'axe d'articulation 2 étant en A, à la position représentée en traits mixtes à cette Figure, l'axe étant en A'. La référence 8 désigne le plan moyen du dossier 1, qui passe par l'axe 2 et le doigt 6.

La gâche 7 comporte un couloir 9 qui ne s'étend que sur une partie de l'épaisseur de la gâche et et délimité par une piste de guidage inférieure 10 et piste de maintien supérieure 11. La piste de guidage 10 a sensiblement la forme d'un secteur cylindrique centré sur l'axe A, son rayon étant déterminé de manière que le doigt de verrouillage 6 glisse sur elle quand le dossier 1 pivote autour de l'axe A; la piste de maintien 11 a une forme qui sera précisée plus loin. Le couloir 9, se prolonge vers l'avant par une buse de dégagement 12.

Un ressort de rappel 13 logé à l'intérieur de gâche 7 tend à appliquer le doigt 6 sur piste inférieure 10. Dans l'exemple représenté, ce ressort est constitué par une lame présentant un oeil central qui est fixé à la gâche par un axe 14. Cette gâche comporte une creusure 15 disposée dans le plan de la lame et s'étendant audessus de la piste 11 mais décalée transversalement par rapport au couloir 9, de façon à permettre l'escamotage des bras de la lame lorsque le doigt 6 est en appui contre cette piste 11.

La référence 15a désigne une butée prévue à l'intérieur de la gâche et limitant la course de la branche de la lame 13 coopérant avec le doigt 6.

Enfin la gâche 7 est traversée par deux lumières 16 et 17 qui sont disposées aux extrémités du couloir 9.

A la Figure 1, le dossier 1 est reculé au maximum et est verrouillé en position par engagement du doigt 6 dans la lumière arrière 17. Après avoir dégagé ce doigt, il est possible de basculer le dossier vers l'avant autour de l'axe 2 en position A, le plan 8 venant en 8a, ce qui augmente notablement le volume de charge possible derrière le dossier, principalement en zone haute; en fin de basculement, le dossier est verrouillé dans sa nouvelle position par engagement dans la lumière avant 16 du doigt 6 qui se trouve en 6'. Pendant le basculement du dossier, le doigt 6 glisse sur la piste inférieure 10. La lumière 16 est positionnée de manière que l'axe du doigt 6 dans la position 6' se trouve sur la médiatrice de AA'.

On peut ensuite faire basculer vers l'avant les biellettes 3, ce qui déplace vers l'avant la partie inférieure du dossier et entraîne une augmentation importante du volume de charge, celui-ci étant réparti de manière uniforme sur les zones basse, moyenne et haute; le plan 8 vient en 8b. Pendant ce mouvment le doigt 6 débat à l'intérieur de la lumière 16, ce qui perment de procéder à cette manoeuvre sans déverrouiller ce doigt. En fin de mouvement, le doigt reprend la position 6'. L'extrémité arrière du couloir 9 est déterminée de manière que la position 8b soit parallèle à la position 8. De son côté la lumière 16 a une longueur telle que le doigt 6 se trouve à sa partie supérieure, en 6", lorsque l'axe 2 est au point i' tel que ce point, l'axe 4, et l'axe du doigt 6 soient alignés.

Quand le doigt 6 se trouve dans la position 6', il est possible après avoir dégagé ce doigt de la lumière avant 16, de basculer le dossier 1 vers l'avant, aussi bien lorsque ce dossier est dans la position 8a (l'axe 2 étant en A) que lorsqu'il est dans la position 8b (l'axe 2 étant en A'). Le doigt 6 se dégage alors du couloir 9 par la buse 12, en suivant selon le cas la trajectoire 18 ou la trajectoire 18'.

Lorsque le dossier est dans la position 8b, il est possible de ramener le dossier dans la position 8, en opérant en deux temps, c'est-à-dire en faisant d'abord pivoter les bielles 3 de façon à ramener l'axe 2 dans la position A, puis en faisant ensuite pivoter le dossier autour de l'axe 2. Dans ce cas, la piste 11 pourrait s'étendre parallèlement à la piste 10 en étant écartée de celle-ci d'une distance sensiblement égale au diamètre de l'axe 6; la lumière 16 ferait alors saillie vers le haut par rapport à la piste 11. Dans un tel mode de réalisation, la lumière 17 serait constituée par un simple trou dans lequel pourrait s'engager le doigt 6. Mais il y a avantage à donner à cette lumière une longueur telle que le doigt 6 vienne à fond de lumière en 6''' quand l'axe 2 vient au point i tel que ce point, l'axe 4 et l'axe du doigt 6 au fond de la lumière soient alignés. Cela permet sans déverrouillage du doigt 6 de faire pivoter les biellettes 3 jusqu'à ce que l'axe 2 se trouve pratiquement au point i', le dossier occupant la position 8c.

Il y a également avantage à ce qu'on puisse ramener le dossier de la position 8b à la position 8 d'une manière continue, après avoir dégagé le doigt 6 de la lumière 16. Pour cela, la piste 11 doit au minimum être l'enveloppe de la courbe permettant le pivotement autour de l'axe i' du doigt 6 en position 6" et de la courbe permettant le pivotement autour de l'axe i du doigt 6 en position 6'''. Pratiquement la piste 11 peut, comme représenté, être constituée par une portion de cylindre centrée sur l'axe 4 et partant de l'extrémité supérieure de la lumière 16. Il est ainsi possible de ramener le dossier dans sa position de départ en le maintenant sensiblement parallèle à lui-même.

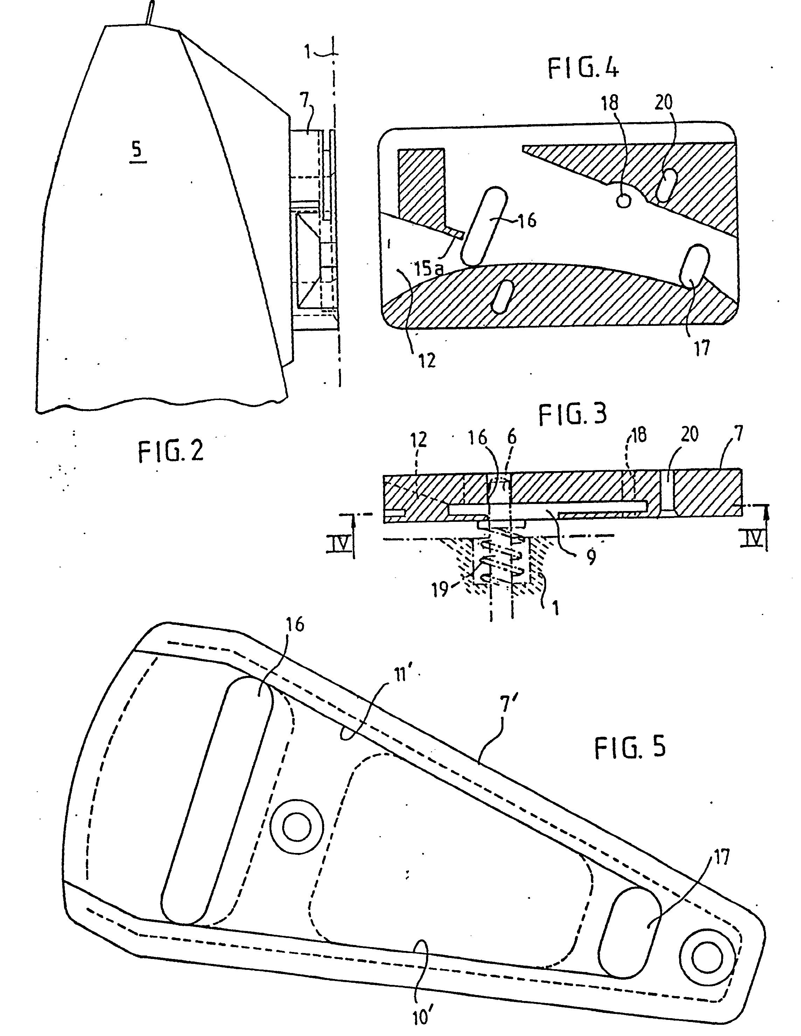

Aux Figures 2 à 4, on voit en particulier la butée 15a un trou 18 ménagé dans la gâche 7 pour le passage de l'axe 14 et un ressort 19 qui tend à maintenir le doigt 6 engagé dans la lumière de verrouillage 16 ou dans la lumière 17. Des moyens non représentés au dessin permettent de déplacer ce doigt contre l'action du ressort 19 et, de préférence, de déplacer simultanément les deux doigts situés de part et d'autre du dossier 1. La gâche 7 comporte des trous 20 en forme de boutonnières qui permettent de fixer la gâche sur la structure 5 de manière réglable.

La Figure 5 montre un autre mode de réalisation 7' de la gâche. Dans ce mode de réalisation, la piste courbe 10 dont le rayon est normalement relativement grand a été remplacée par une piste rectiligne 10'; de son côté, la piste de maintien 11' est également rectiligne et sensiblement symétrique de la piste 10' par rapport au plan médian longitudinal de la gâche. Comme, dans le mode de réalisation précédent, les lumières 16 et 17 sont prévues aux extrémités des pistes 10' et 11'.

**Revendications**

1. Siège escamotable à dossier basculant, dont le dossier est relié, à sa partie inférieure, à la structure (5) du véhicule par des biellettes basculantes (3) et porte dans sa partie supérieure au moins un doigt de verrouillage (6) mobile axialement et coopérant avec une gâche latérale (7 ou 7') solidaire de la structure, caractérisé en ce que la gâche (7 ou 7') comporte une première lumière allongée (17) dans laquelle peut s'engager le doigt de verrouillage (6) pour une première position arrière (8) du dossier, une seconde lumière allongée (16) dans laquelle peut s'engager le doigt de verrouillage dans une seconde position, avant (8a) du dossier, les deux lumières étant reliées l'une à l'autre par un couloir (9) dont la profondeur est inférieure à celle des lumières, qui débouche vers l'avant par une buse de dégagement (12), et qui est délimité vers le bas par une piste de guidage (10 ou 10') pouvant être soit rectiligne ou approximativement rectiligne, soit centrée sur l'axe de pivotement inférieur (2) du dossier pour la position d'extrémité arrière des biellettes (3), et des moyens élastiques (13) tendant à appliquer le doigt sur la piste de guidage (10) du couloir.

2. Siège selon la revendication 1, caractérisé en ce que le couloir (9) est délimité vers le haut par une piste de maintien (11 ou 11') qui est soit rectiligne ou approximativement rectiligne, soit centrée sur l'axe de pivotement inférieur (4) des biellettes (3).

3. Siège selon la revendication 2, caractérisé en ce que la piste de guidage (10') et la piste de maintien (11') sont toutes deux rectilignes et sensiblement symétriques l'une de l'autre par rapport au plan médian longitudinal de la gâche.

4. Siège selon l'une des revendications précédentes, caractérisé en ce que la piste de maintien (11) est au minimum l'enveloppe de la courbe permettant le pivotement, autour d'un point i, du doigt (6) en position avant et de la courbe permettant le pivotement, autour d'un point i', de ce doigt (6) en position arrière, les points i et i' étant respectivement définis par la position de l'axe de pivotement (2) du dossier lorsque celui-ci, l'axe de pivotement (4) des biellettes et le doigt (6) en position arrière sont alignés, et la position de cet axe (2) lorsque l'axe de pivotement (2), l'axe de pivotement (4) et le doigt (6) en position avant sont alignés.

**Patentansprüche**

1. Klappbarer Sitz mit kipperbarer Rükenlehne, dessen Rückenlehne mit ihrem unteren Teil mit dem Rahmen (5) mittels schwenkbarer Schwingarme (3) verbunden ist und an ihrem oberen Teil wenigstens einen axial beweglichen Verriegelungszapfen (6) aufweist, der mit einer seitlichen Verriegelung (7 oder 7') zusammenwirkt, die mit dem Rahmen vereinigt ist, dadurch gekennzeichnet, daß die Verriegelung (7 oder 7') ein ersten Langloch (17) aufweist, in das der Verriegelungszapfen (6) in einer ersten, hinteren Position (8) der Rückenlehne eingreifen kann, sowie ein zweites Langloch (16) in das der Veriegelungszapfen in einer zweiten vorderen Position (8a) der Rückenlehne eingreifen kann, wobei die beiden Langlöcher miteinander durch eine Gleitbahn (9) verbunden sind, deren Tiefe geringer ist als die der Langlöcher und die sich nach vorne in eine Freigabeerweiterung (12) öffnet und die unten durch einen Führungswand (10 oder 10') begrenzt wird, die entweder geradlinig oder annähernd geradlinig sein kann oder zentrisch zur unteren Schwingachse (2) der Rückenlehne in der hintersten Position der Schwingarme (3) und daß elastische Elemnte (13) bestrebt sind, den Zapfen auf die Führrungswand (10) der Gleitbahn zu drücken.

2. Sitz nach Anspruch 1, dadurch gekennzeichnet, daß die Gleitbahn (9) oben durch eine Begrenzungsbahn (11 oder 11') begrenzt ist, die entweder geradlinig oder annähernd geradlinig ist oder zentrisch zur unteren Schwenkache (4) der Schwingarme (3).

3. Sitz nach Anspruch 2, dadurch gekennzeichnet, daß die Führrungsbahn (10') und die Begrenzungsbahn (11') beide geradlinig sind und gegenseitig genau symmetrisch zu einer Mittelebene in Längsrichtung der Verriegelung.

4. Sitz nach einem der vorhergegangenen Ansprüche, dadurch gekennzeichnet, daß die Begrenzugsbahn (11) zumindest die Umhüllende der Kurve ist, die die Schwenkung des Zapfens (6) in vorderer Position um einem Punkt i erlaubt und der Kurve, die die Schwenkung des Zapfens (6) in hinterer Position um einen Punkt i' erlaubt, wobei die Punkte i und i' definiert werden durch die Position der Schwenkachse (2) der Rückenlehne, wenn diese, die Schwenkachse (4) der Schwingarme und der Zapfen (6) in der hinteren Position fluchten bzw. die Position dieser Achse (2), Schwenkachse (2), die Schwenkachse (4) und der Zapfen (6) in der vorderen Position fluchten.

**Claims**

1. Retractable seat with swing back, whose back is connected, at its lower part, to the structure (5) of the vehicle by swinging links (3) and has in its upper part at least one axially movable locking finger (6) cooperating with a catch (7 or 7') integral with the structure, characterized in that the catch (7 or 7') comprises a first elongate aperture (17) in which the locking finger (6) may be engaged for a first rear position (8) of the seat back, a second elongate aperture (16) in which the locking finger may engage in a second front position (8a) of the seat back, the two apertures being connected together by a gully (9) whose depth is less than that of the apertures, which opens forwardly through a clearance channel (12), and which is defined downwardly by a guide track (10 or 10') which may be either rectilinear or approximately rectilimear or centered on the lower pivoting shaft (2) of the seat back for the endmost rear position of the links (3), and resilient means (13) tending to apply the finger on the guide track (10) of the channel.

2. Seat according to claim 1, characterized in that the channel (9) is defined upwardly by a holding track (11 or 11') which is either rectilinear or approximately rectilinear, or centered on the lower pivoting shaft (4) of the links (3).

3. Seat according to claim 2, characterized in that the guide track (10') and the holding track (11') are both rectilinear linear and substantially symmetrical with each other with respect to the longitudinal median plane of the catch.

4. Seat according to one of the preceding claims, characterized in that the holding track (11) is at minimum the envelope of the curve allowing pivoting, about a point i, of the finger (6) in the front position and of the curve allowing pivoting, about a point i' of this finger (6) in the rear position, the points i and i' being respectively defined by the pivoting shaft (2) of the seat back when this latter the pivoting shaft (4) of the links and the finger (6) in the rear position are aligned, and the position of this shaft (2) when the pivoting shaft (2), the pivoting shaft (4) and the finger (6) in the front position are aligned.

FIG. 1

FIG.2

FIG.4

FIG.3

FIG.5